Europäisches Patentamt

(19) European Patent Office

Office européen des brevets

(11) Publication number: **0 014 583**
**A1**

## (12) EUROPEAN PATENT APPLICATION

(21) Application number: **80300329.2**

(22) Date of filing: **05.02.80**

(51) Int. Cl.³: **H 04 L 11/12**
**H 04 L 1/00, G 06 F 11/30**

(30) Priority: **13.02.79 GB 7905131**

(43) Date of publication of application:
**20.08.80 Bulletin 80/17**

(84) Designated Contracting States:
**AT BE CH DE FR GB IT LU NL SE**

(71) Applicant: **MACWELL SYSTEMS LIMITED**
**The Maltings**
**Sawbridgeworth Hertfordshire(GB)**

(72) Inventor: **McLennan, Anthony Ian**
**6, Clipped Hedge Hatfield Heath,**
**Nr. Bishop's Stortford Hertfordshire(GB)**

(74) Representative: **Robinson, John Stuart et al,**
**Marks & Clerk 57/60 Lincoln's Inn Fields**
**London WC2A 3LS(GB)**

(54) **Improvements in or relating to fault-finding apparatuses.**

(57) A fault-finding apparatus (10) is provided for monitoring a system such as a data communications system. The apparatus (10) includes processing means (15) for processing signals of the system to ascertain whether there is a fault in the system. The apparatus (10) also includes indicating means (17) for indicating a code, when a fault is found by the processing means (15), indicative of the type of fault or of the part of the system in which the fault has occurred.

FIG 3

1

"IMPROVEMENTS IN OR RELATING TO FAULT-FINDING APPARATUSES"

The present invention relates to fault-finding apparatuses. For instance, such an apparatus might be used at a remote station of a data communications network for providing an indication of faults occuring at the remote station or in the line connecting the remote station to a central station.

According to the invention, there is provided a fault-finding apparatus comprising means for receiving signals from a system to be tested, means for processing the received signals to ascertain whether there is a fault in the system, and indicating means responsive to the processing means for indicating a code indicative of a type of error or a part of the system in which an error has occurred.

The apparatus is preferably continuously connected to the system and performs real-time fault-finding. The code is preferably in simplified form, such as a two digit number, and can be referred to a manual containing a list of all the available codes with corresponding technical and/or non-technical descriptions of the types of error and the part of the system in which the error has occurred. This is of advantage in a remote station which is operated by non-technical personnel because, when the apparatus finds a fault and generates, for instance, a two digit "error" code, a non-technical operator can look up the code in the manual and supply the corresponding information to a central station which will generally have technical personnel for dealing with such problems. It may be that the remote station contains pieces of equipment made by different manufacturers, each of which requires the service of the respective manufacturer in the event of a fault. Because the manual can provide from the two digit code information as to which piece of equipment is faulty, the appropriate manufacturer or service department can be contacted without delay instead of, for instance, having to call each manufacturer in turn to inspect his respective equipment.

The indicating means may comprise means for transmitting the code directly to a central station, for instance in the form of synthetic speech on a telephone line, automatically when a fault is found. Alternatively, the indicating means may comprise a display, for instance in the form of a two digit seven segment display.

The apparatus may be provided at the remote station of a data communications network having a central station which contains most or all of the data storage and/or processing facilities and which communicates with remote stations, for instance, by means of the telephone network. The apparatus may include connection means for connecting it to analogue and digital sides of a modem of the remote station, and an interface including an analog-to-digital converter for converting incoming signals received directly from the telephone line or supplied thereto by the modem.

The invention will be further described, by way of example, with reference to the accompanying drawings, in which:

Figure 1 is a block diagram of a data communications system;

Figure 2 shows part of the system of Figure 1 to which a fault-finding apparatus constituting a preferred embodiment of the invention is connected;

Figure 3 is a block diagram of the fault-finding apparatus of Figure 2;

Figures 4, 5, and 6 are a circuit diagram of the fault-finding apparatus of Figure 2; and

Figure 7 is a flow diagram illustrating operation of the fault finding apparatus of Figure 2.

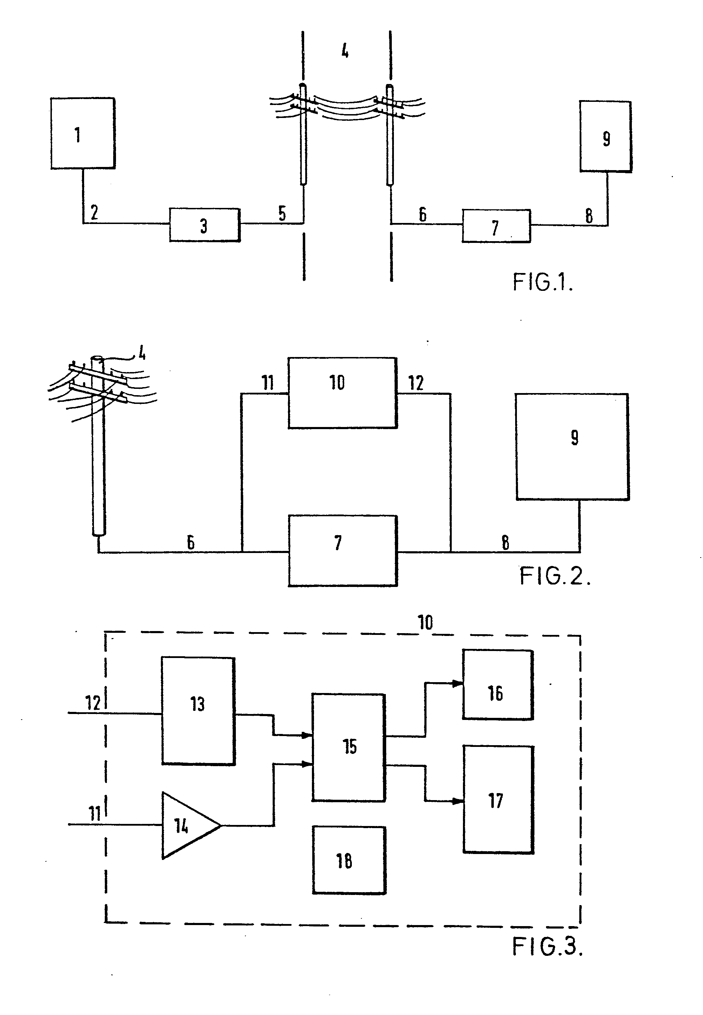

Figure 1 shows a data communications system including a central computer 1 disposed at a central station of the system. The central computer 1 is connected via a standardised interface indicated at 2 to a modem 3, which comprises a digital-to-analog tone converter. The modem 3 is connected via another standardised interface 5 to an analogue transmission network 4 indicated as a public telephone network.

A remote station of the data communication system comprises remote digital equipment 9 connected via a standardised interface 8, identical to the interface 2 at the central station, to a modem 7, which converts

tone signal transmissions in analogue form to digital output signals. The modem 7 is connected _via_ another standardised interface 6, identical to the interface 5 at the central station, to the transmission network 4.

Figure 2 shows the remote station of Figure 1, with like reference numerals referring to like parts. In the remote station, a fault-finding apparatus 10 constituting a preferred embodiment of the invention is arranged in parallel with the modem 7 by means of connections 11 and 12. The apparatus 10 is normally continuously connected in parallel with the modem 7 and, for this purpose the connections 11 and 12 may be made in the form of input and output connecters for the modem 7 wired in series with the standard interfaces 6 and 8 and the modem 7 and having branch connections connected to the apparatus 10. The apparatus 10 compares signals exchanged between the standardised interfaces 6 and 8 and the modem 7 and processes these signals so as to detect any deviation from the specifications of the interfaces. When such deviations are detected, information relating to the deviations are displayed by the apparatus 10 for use by an operator.

Figure 3 is a block diagram of the apparatus 10 of Figure 2 showing the connections 11 and 12. The connection 11 receives analogue input signals and supplies these to an analogue interface 14, whose output is connected to a microprocessing unit 15. The connection 12 receives digital input signals and supplies these via a digital interface 13 to the microprocessor unit 15. The program for the microprocessor unit 15 is stored in a read only memory 16. The output of the microprocessor unit 15 is connected to a display driver and display 17. The apparatus 10 is powered by a power supply 18.

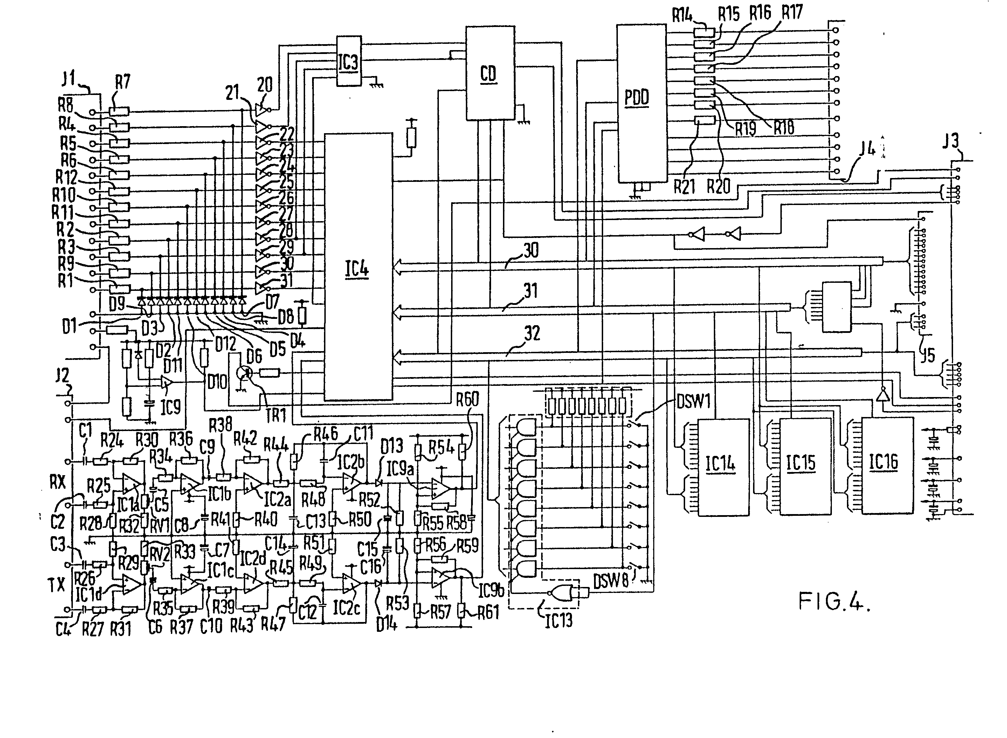

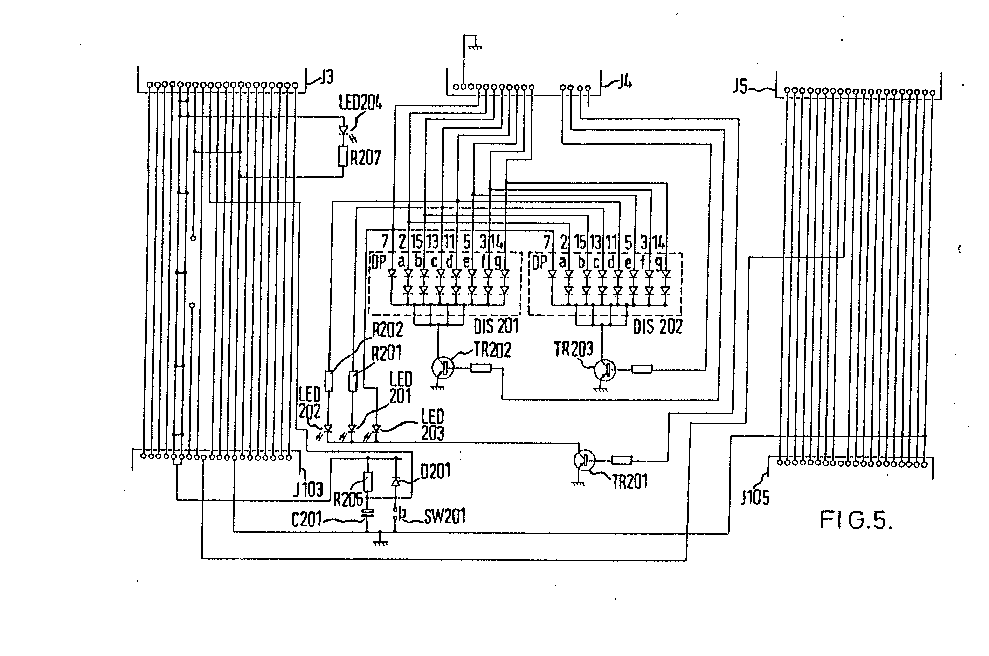

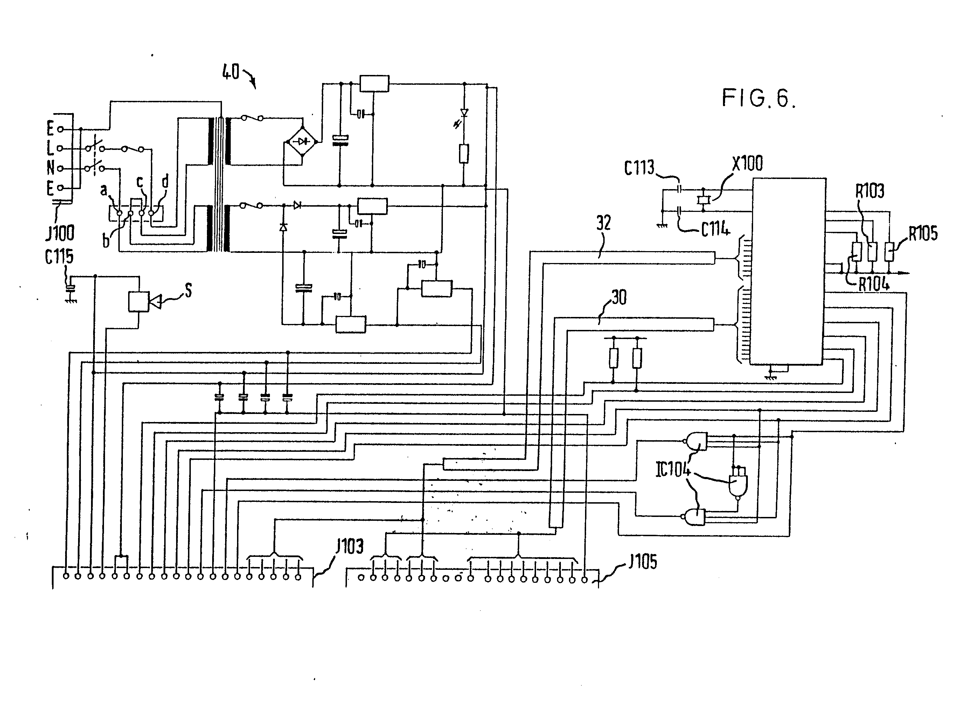

Figures 4, 5, and 6 are circuit diagrams showing the apparatus of Figure 2. It is convenient to divide the circuit in this way, with each figure illustrating a respective module, for the purposes of construction of the apparatus. Thus, Figure 4 shows the circuit diagram of a peripheral board, Figure 5 shows the circuit diagram of a processing board, and Figure 6 shows the circuit diagram of a display board. The peripheral board illustrated in Figure 4 will be described first.

The connection 12 of Figure 3 supplies an input connector J1 for receiving digital signals, whereas the connection 11 for analogue signals is connected to a connector J2. Analogue signals from the connection 11 are supplied to the apparatus in the form of receive carrier signals RX on pins 1 and 4 of the connector J2 and transmit carrier signals TX on the pins 2 and 5 of the connector J2. The receive and transmit carrier signals are supplied to respective differential amplifiers comprising integrated circuit operational amplifiers $IC1_a$ and $IC1_d$, resistors R24 to 31, and capacitors C1 to 4. The output of the differential amplifiers is supplied via respective gain controls RV1 and RV2 connected in series with resistors R32 and 33 to respective filter circuits having a bandpass characteristic and comprising operational amplifiers $IC1_b$, $IC1_c$, IC2a to d, resistors R34 to R51, and capacitors C5 to C14. The output signals from the filter circuits are rectified by respective diodes D13 and D14 and smoothed by respective smoothing circuits R52, C15 and R53, C16, and are supplied to first inputs of respective comparators IC9a and b. The comparators have second inputs connected to respective potential dividers formed by resistors R54 and R55 and R56 and R57 with feedback resistors R58 and R59 and output resistors R60 and R61. The output signals of the comparators IC9a and b are arranged to be at logic level suitable for processing by the remainder of the apparatus.

The digital inputs from the connector J1 are supplied by respective series resistors R1 to R12 to the inputs of respective inverters 20 to 31. Zener diodes D1 to D12 are connected between the respective inputs of the inverters 20 to 31 and ground to provide over voltage protection for the digital inputs.

The outputs of the comparators IC9a and b and the outputs of the inverters 22 to 31 are connected to respective inputs of a peripheral interface adapter IC4. The peripheral interface adapter IC4 controls the supply of information relating to the signals supplied to the connectors J1 and J2 to a microprocessor IC105 (Figure 6). The interface adapter IC4 also serves to control and monitor supervisory functions of the apparatus.

The digital signals supplied _via_ the connection 12 to the connector J1 can be split up into supervisory or control flags and transmit and receive data channels, each channel comprising a data circuit and a corresponding timing circuit. The signals from the data channels are supplied from the outputs of the inverters 20, 21, 28, and 29 to the inputs of a four-to-one multiplexer IC3. The output of the multiplexer IC3 is connected to the input of a communication adapter CD, which is capable of processing one data input at a time, the appropriate input pair being selected by the multiplexer IC3. The communications adapter CD serves to interpret data flowing in the transmit and receive data circuits and supplies the information to the microprocessor IC105.

For convenience, the peripheral board shown in Figure 4 also includes read only memories IC14, IC15, and IC16 in which the program for the microprocessor IC104 is stored. Also, control switches DS1 to 8 allowing the user of the apparatus to select particular functions are connected to the microprocessor _via_ a plurality of buffers provided by an integrated circuit IC13. The peripheral board also includes a programmable display driver PDD connected _via_ current-limiting resistors R14 to R21 and connector J4 to seven-segment display devices DIS201 and DIS202 on the display board arranged on a front panel of the apparatus for viewing, together with discrete display devices in the form of light emitting diodes LED201 to 203.

The various parts of the circuit shown in Figure 4 are connected to the microprocessor IC105 via a standard microprocessor bus system comprising an address bus 30, a chip selector bus 31, a data bus 32, and a control bus. The bus system together with power supply connections are connected to the processor board via connectors J3 and J5, the display board shown in Figure 5, and connectors J103 and J105.

The display board shown in Figure 5 comprises, apart from the displays DIS201, DIS202 and LED201 to 203, multiplexing transistors TR201, TR202, and TR203 for multiplexing the display devices, current limiting resistors R201 and R202, a power supply on-indicating circuit comprising a light emitting diode LED204 and series resistor R207, connectors J3, J4, J5, J103, and J105, and a manual reset and power on reset circuit comprising a switch SW201, a diode D201, a resistor R206, and a capacitor C201. The reset circuit is arranged to reset the apparatus to its initial operating position whenever the power supply is switched on and whenever the manual reset switch SW201 is pressed for resetting the apparatus to normal operation after a fault has been found.

The processor board shown in Figure 6 includes the microprocessor IC105 provided with resistors R103, R104, and R105 for establishing its correct operating condition and with a crystal X100 and capacitors C113 and C114 for controlling the clock frequency of the microprocessor IC105. The processor board also comprises power supplies for the whole apparatus indicated generally at 40 and connected to a mains input connector J100. Further, for the sake of convenience, a sounder S and associated cepacitor C115 are provided on the processor board. An integrated circuit IC104 is arranged to provide standard read and write strobing pulses required by the peripheral interface adapter IC4 (Figure 4).

In use, the apparatus shown in Figures 4 to 6 performs continuous real-time fault-finding by monitoring the connections on either side of the modem 7 (Figure 2). The receive and transmit carrier signals TX and RX are supplied to the connector J2. These analogue signals are supplied from the connector to the respective differential amplifiers whose outputs are supplied via the respective attenuators RV1 and RV2 to the following respective bandpass filters. The band width and Q of these filters is fixed. The outputs of the filters are supplied to the respective comparators IC9a and b after rectification and smoothing. Thus, the comparators receive signals which depend on whether the receive and transmit carrier signals RX and TX have amplitudes within the range specified for the telephone line and have frequencies within the normal working range. If this is the case, then the comparators IC9a and b produce logic level 1 at their outputs whereas, if the amplitude or frequency of either analogue signal supplied to the connector J2 is outside specified limits, the corresponding comparator produces an output signal of logic level nought.

With the exception of transmit and receive time signals, all the other monitoring inputs of the connector J1 are supplied to the peripheral interface adapter IC4, which also receives the outputs from the comparators IC9a and b. In addition, the peripheral interface adapter IC4 controls the activation of the sounder S by means of a transistor TR1 and receives a signal indicative of equipment power supply or mains failure from the output of a comparator including an operational amplifier IC9.

As described hereinbefore, transmit and receive data channels are serially multiplexed by the multiplexer IC3, the output of which is supplied to the communications adapter CD. Thus, the multiplexer IC3 and the peripheral interface adaptor IC4 form an interface between the input portions of the apparatus and the digital processing portion of the apparatus including the microprocessor IC104. The digital processing system is controlled by the program stored in the read only memories IC14, IC15 and IC16, with alternative options being controlled by selective actuation of the switches DSW1 to DSW8. In addition, the programmable display driver PDD provides an interface between the digital processing portions of the apparatus and the actual displays which are mounted on a front panel of the apparatus. The programmable display driver PDD allows the seven segment displays DS201 and DS202 and the discrete display light emitting diodes LED201 to 203 to

11

be written to <u>via</u> the program as though they were locations in the processor memory. The programmable display driver PDD is capable of driving four seven segment displays although the two seven segment displays and the three discrete displays only are used in the embodiment of the apparatus shown.

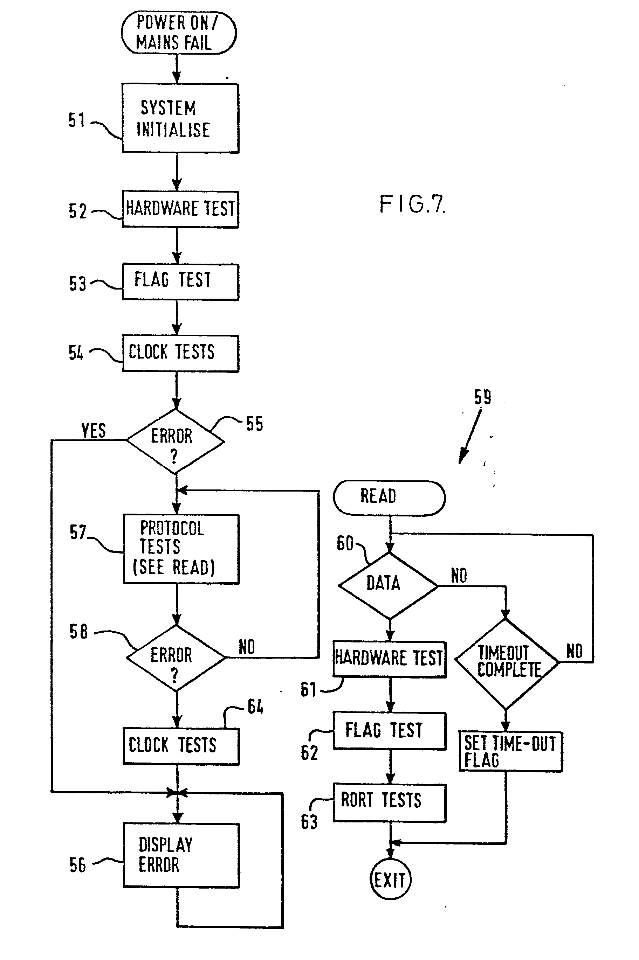

Figure 7 is a flow diagram illustrating operation of the apparatus shown in Figures 4 to 6. The programming is arranged in modular form with the various modules being illustrated in Figure 7. Operation of the apparatus is as follows.

When power is switched on to the apparatus, when a mains failure accurs, or when the reset switch of the apparatus is actuated, an initialisation routine 51 is performed. This routine serves various "housekeeping" functions of the apparatus, such as clearing the seven segment displays and various other storage areas and flags, and presetting various internal control registers of the peripheral interface adapter. Once this routine has been performed, a hardware testing routine 52 is performed. This routine is used to ensure as far as is possible that the apparatus is operational, the cables used to connect the apparatus to the data communications system are intact, and that these cables are correctly connected.

When the routine 52 has been successfully completed,

12

a flag testing routine 53 is performed. This routine checks the operation of the local flags between the modem 7 and the remote digital equivalent9(Figure 2). These flags operate in "hand-shake pairs" and should always be set in the same condition i.e. either both clear or both set. The flag testing routine of the apparatus continually monitors the status of these flags to ensure that they are "hand-shaking" correctly.

If the flag testing routine 53 discovers no errors, then the program proceeds to a clock testing routine 54. This routine checks whether the frequencies of the transmit timing and receive timing clocks are within a specified tolerance of their nominal values, for instance within plus or minus-5% of the nominal clock frequency.

Assuming that the clock frequencies are found to be within the tolerance limit by the clock testing routine 54 the program checks to see whether any error has been found at 55. If an error has been detected, the program will jump to a display error routine 56 and will display codes corresponding to the errors to the operators. In a preferred embodiment of the invention, up to eight error codes can be displayed sequentially by the display error routine, each code being displayed for a period of approximately two seconds. The display error routine 56 will be repeated indefinitely until the apparatus is reset or switched off. However, if no error has been detected, the program proceeds to a protocol testing routine 57. The protocol testing routine 57 processes data transmitted from the equipment of the remote station to the computer at the central station and the responses returned by the computer. Another error checking routine 58 then checks to see whether the protocol testing routine has discovered any errors. If not, the program is returned to the protocol testing routine to form a loop which the program follows indeinitely if the data communications system is working satisfactorily.

Within the protocol testing routine 57 is a read sub-routine 59. The read subroutine is used to obtain data from the comunication .adaptor at 60 and is used several times during each protocol testing routine. The read subroutine includes a hardware testing routine 61, a flag testin: routine 62 and a rort testing routine 63.

The rort testing routine is used to check the relationship between the digital interface and the analogue interface as there as several modes in which a modem can operate which will yield several different combinations of digital interface, activity to analogue interface activity, for instance four versions of rort testing may be contained in the routine 63 with selection of the particular version being made by means of the switches DSW1 DSW8. described hereinbefore.

If an error is detected at 58 in the protocol testing routine 57, then the clock testing routine is re-run at 64.  This clock testing routine is outside the protocol testing loop because of the relatively long process time required for accurately measuring the data clocks.

Various modifications may be made within the scope of the invention.  For instance, it is possible to include within the apparatus means for automatically sending error codes to the central station of the data communications system.  For instance, a synthetic or recorded speech facility may be provided in the apparatus with means capable of dialling  the central station and transmitting the error codes in the form of speech by a standard telephone line.  This facility may also include the possibility of allowing technical staff at the central station of the system to have direct dialled access to the apparatus so as to interrogate the state of the equipment at the remote station.  This could allow an engineer to telephone the apparatus from any normal telephone hand set and to listen to a microprocessor generated message informing him of the status of the apparatus and of any errors detected.

Further, the apparatus may be arranged to handled multiple modem enviroments so that it is capable of monitoring network nodes or multiplexer set stations as used, for instance, by banks and airline ticket booking systems.  As such installations are generally unmanned, this ability together with that of remote interrogation as described above would provide a particularly advantageous combination.

Further, the apparatus is not limited to use in data communications systems. The apparatus may be used for monitoring any activity which is predictable and repeatable, and uses standardised components.

CLAIMS

1.      A fault-finding apparatus comprising means for receiving signals from a system to be tested, means for processing the received signals to ascertain whether there is a fault in the system, and indicating means for indicating a code indicative of a type of fault or a part of the system in which a fault has occurred.

2.      An apparatus as claimed in claim 1, in which the indicating means comprises a display for displaying the code.

3.      An apparatus as claimed in claim 2, in which the display is arranged to display the code in numeric form.

4.      An apparatus as claimed in claim 3, in combination with a manual in which the numeric codes are listed in juxtaposition with corresponding technical and/or non-technical descriptions of the errors.

5.      An apparatus as claimed in claim 1, in which the indicating means comprises means for transmitting the code to a distant part of the system to be tested.

6.      An apparatus as claimed in claim 5, in which the transmitting means comprises means for establishing a connection via a standard telephone line with a standard telephone handset situated at the distant part of the system to be tested.

0014583

7.     An apparatus as claimed in claim 5 or 6, in which the transmitting means is arranged to produce signals corresponding to speech for transmission to the distant part of the system to be tested.

8.     An apparatus as claimed in any one of the preceding claims, in which the processing means is arranged to supply a plurality of codes sequentially and repetitively to the indicating means.

9.     An apparatus as claimed in any one of the preceding claims, in which the processing means comprises a microprocessing unit including a microprocessor.

10.     An apparatus as claimed in any one of the preceding claims, for use with a modem of a data communications system, the apparatus including an analogue interface, for connection to an analogue side of the modem arranged to produce digital signals indicative of whether the frequency and amplitude of signals at the analogue side of the modem within predetermined ranges.

11.     An apparatus as claim 10, in which the receiving means comprises one or more connectors arranged to be connected in series with connections to the modem and having branch connections to allow the apparatus to be connected continuously to the modem

1/5

0014583

FIG.1.

FIG.2.

FIG.3.

FIG.4.

0014583

FIG.5.

0014583

FIG.6.

0014583

FIG.7.

POWER ON/
MAINS FAIL

51 — SYSTEM
INITIALISE

52 — HARDWARE TEST

53 — FLAG TEST

54 — CLOCK TESTS

YES — ERROR ? — 55

57 — PROTOCOL TESTS (SEE READ)

58 — ERROR ? — NO

64 — CLOCK TESTS

56 — DISPLAY ERROR

59

READ

60 — DATA — NO

61 — HARDWARE TEST

62 — FLAG TEST

63 — RORT TESTS

TIMEOUT COMPLETE — NO

SET TIME-OUT FLAG

EXIT

European Patent
Office

**EUROPEAN SEARCH REPORT**

EP 80300329.2

| | DOCUMENTS CONSIDERED TO BE RELEVANT | | CLASSIFICATION OF THE APPLICATION (Int. Cl.) |
|---|---|---|---|
| Category | Citation of document with indication, where appropriate, of relevant passages | Relevant to claim | |
| | GB - A - 1 462 807 (COMPAGNIE HONEYWELL BULL)<br><br>+ Page 1, lines 10-28; page 2, line 21 to page 4, line 82; Fig. 1,2 +<br>-- | 1 | H 04 L 11/12<br>H 04 L 1/00<br>G 06 F 11/30 |
| | DE - B1 - 2 348 969 (SIEMENS)<br><br>+ Totality +<br>-- | 1,5-7 | |
| | GB - A - 1 389 939 (GENERAL DATACOMM)<br><br>+ Page 1, lines 11-48; page 2, line 13 to page 3, line 16 + Fig. 1,2 +<br>-- | 1 | TECHNICAL FIELDS SEARCHED (Int. Cl.) |
| | US - A - 4 093 940 (LIGNES TELEGRA-PHIQUES ET TELEPHONIQUES)<br><br>+ Column 1, lines 15-17; column 7, lines 18-26; fig. 3 +<br>-- | 1-3 | H 04 L 11/00<br>H 04 L 1/00<br>H 04 L 27/00<br>H 04 M 11/00<br>H 04 M 3/00<br>G 06 F 11/00<br>G 08 C 25/00 |
| | DE - A1 - 2 717 375 (OLYMPIA WERKE)<br><br>+ Page 1, line 4 to page 2, line 13; page 4, lines 5-20; page 5, lines 1-28; fig. 1 +<br>-- | 1-3,9 | |
| | DE - A - 2 036 954 (INTERNATIONAL BUSINESS MACHINES)<br>+ Page 1, line 3 to page 2, line 20; page 3, line 8 to page 4, line 28; page 29, lines 2-17; fig. 1,2 +<br>-- | 1,2,5,6 | CATEGORY OF CITED DOCUMENTS |
| | FR - A - 2 161 606 (MILGO ELECTRO-NIC CORPORATION)<br>+ Page 1, line 1 to page 2, line 16; page 2, line 31 to page 4, line 24; fig. 1 +<br>---- | 1 | X particularly relevant<br>A technological background<br>O non-written disclosure<br>P intermediate document<br>T theory or principle under the invention<br>E conflicting application<br>D document cited in the application<br>L citation for other reasons<br><br>& member of the same patent family, corresponding document |

X The present search report has been drawn up for all claims

| Place of search | Date of completion of the search | Examiner |
|---|---|---|
| VIENNA | 14-05-1980 | HAJOS |

EPO Form 1503.1 06.78